Europäisches Patentamt

European Patent Office

Office européen des brevets

(19)

(11) Publication number: **0 087 886**
**B1**

# (12) EUROPEAN PATENT SPECIFICATION

(45) Date of publication of patent specification: **14.01.87**

(21) Application number: **83300780.0**

(22) Date of filing: **16.02.83**

(51) Int. Cl.⁴: **G 11 B 27/02,** G 11 B 5/09

(54) Apparatus for connecting digital data.

(30) Priority: **17.02.82 JP 23796/82**

(43) Date of publication of application:
**07.09.83 Bulletin 83/36**

(45) Publication of the grant of the patent:
**14.01.87 Bulletin 87/03**

(84) Designated Contracting States:
**CH DE FR GB LI**

(56) References cited:
**FR-A-2 448 209**
**GB-A-2 060 227**
**GB-A-2 071 370**
**US-A-4 224 642**
**US-A-4 249 218**

**Patent Abstracts of Japan vol. 6, no. 70, 6 May
1982 & JP-A-57-8972
Patent Abstracts of Japan vol. 5, no. 165, 22
October 1981 & JP-A-56-94557**

(73) Proprietor: **SONY CORPORATION
7-35 Kitashinagawa 6-Chome Shinagawa-ku
Tokyo 141 (JP)**

(72) Inventor: **Watanabe, Nobuhiko c/o Patent
Division
Sony Corporation 7-35 Kitashinagawa-6
Shinagawa-ku Tokyo (JP)**

(74) Representative: **Thomas, Christopher Hugo
et al
D Young & Co 10 Staple Inn
London WC1V 7RD (GB)**

## Description

This invention relates to an apparatus for connecting digital data, and more particularly to apparatus for connecting first and second audio pulse code modulated data from first and second magnetic tapes which have been splice edited together.

We have previously proposed a method of transmitting a pulse coded modulated (PCM) signal with error correction capabilities. Such a method is disclosed, for example, in our UK patent specification GB—A—2 060 227. In this method, a one-channel PCM signal is divided into two series of words; even numbered words and odd numbered words. An even/odd distributor is used in a digital encoder to divide the one-channel PCM signal into the two word series. The even numbered words are delayed by an amount D in a delay circuit. The delayed even numbered word series and the odd numbered word series (which is not delayed) are supplied to separate correction encoders where the words are encoded. After the encoding step, the words are synthesized and modulated by a modulator for transmission.

This method of transmitting a PCM signal can be used, for example, in a digital tape recorder in which an audio signal is digitally recorded on a magnetic tape. It is sometimes desirable, however, to splice edit a magnetic tape containing a digital signal recorded as described above. In a splice editing operation, the even numbered word series and odd numbered word series are supplied to error correction circuits where, in addition to error correction operations, appropriate compensation is applied to correct for the delay in the even numbered word series. After the error correction operations, a cross-fader is used to connect the data recorded on the magnetic tape before and after the splice editing point.

An interval with many errors in the data can occur before and after a splice editing point on the magnetic tape. A muting operation is usually applied (see, for example, Patent Abstracts of Japan, Vol. 5, No. 165, 22 October 1981, our Japanese patent application, JP—A—56—94557) to the interval where the errors are detected in order to improve the signal reproduced from the cross-faded data. If the time for the beginning of the cross-fading operation is fixed in relation to the position of the splice editing point, and if the muting interval is long, the average level of the PCM signal reproduced in the cross-fade interval can be reduced to an unsatisfactory level due to the operation of the cross-fader.

According to the present invention there is provided an apparatus for connecting first and second pulse code modulated audio data from first and second magnetic tapes which have been splice edited together, each of said first and second PCM audio data comprising an interleaved even series and an interleaved odd series of digital words, one of said series of digital words being delayed relative to the other, the apparatus comprising:

error detector means for detecting errors in said even and odd series of digital words; and cross-fading means for fading out said first PCM audio data and fading in said second PCM audio data; characterised in that:

said error detector means further generates respective even and odd muting request signals when the number of errors in said even and odd series of digital words is such as to prevent error correction;

splice point detector means detects the splice point between said first and second PCM audio data and generates a splice control signal beginning at said splice point and of a duration corresponding to the sum of said delay and the interleave length of said series of digital words in response thereto; and

said cross-fading means fades out said first PCM audio data in response to termination of one of said even and odd muting request signals while said splice control signal is present and in response to generation of the other one of said even and odd muting request signals, and fades in said second PCM audio data when one of said even and odd muting request signals terminates.

The invention will now be described by way of example with reference to the accompanying drawings, in which:

Figure 1 is a block diagram of a previously proposed system for transmitting a pulse coded modulated signal;

Figure 2 is a schematic diagram to which reference will be made in explaining the operation of the apparatus of Figure 1;

Figure 3 is a schematic diagram to which reference will be made in explaining the operation of an embodiment of the invention;

Figure 4 is a block diagram of an embodiment of apparatus in accordance with the invention;

Figure 5 is a block diagram of a circuit for generating a control signal for a cross-fader in the embodiment of Figure 4; and

Figures 6, 7, 8, 9 and 10 are time charts to which reference will be made in describing the operation of the circuits of Figures 4 and 5.

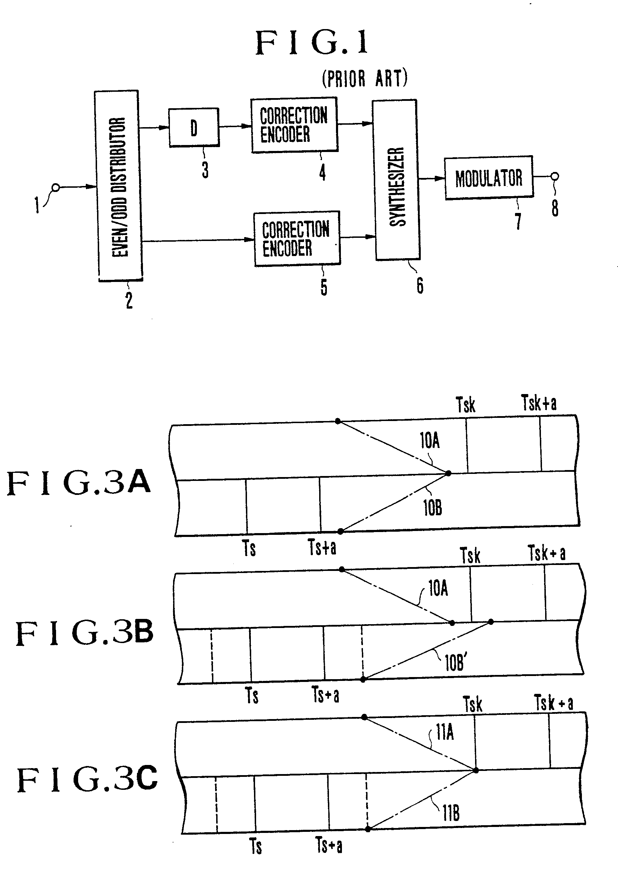

Figure 1 shows a previously proposed apparatus (disclosed in our UK patent specification GB—A—2 060 227) for connecting first and second data, such as comprise an audio pulse code modulated (PCM) signal. A one-channel PCM signal for which one sample has been converted into one word is supplied to an input terminal 1. An even/odd distributor 2 divides the one-channel PCM signal into an even numbered word series and an odd numbered word series. The even word series is supplied through a delay circuit 3, having a delay amount D, to a correction encoder 4. The odd word series is supplied directly to a correction encoder 5. The correction encoders 4 and 5 perform time-interleaving of the digital data supplied thereto (wherein the sequence of words comprising the digital data are rearranged in time; the distance over which the rearrangement takes place being known as the interleave length), and other processing operations such as error correction (which may be, for example, the generation of a parity code or the like). Data from the correction encoders 4 and 5 are supplied to a synthesizer 6, a modulator 7 and thence, to an output terminal 8.

As described above, it is possible substantially to prevent data from being lost due to a drop-out or the like at a connecting point in the data by shifting the even word series and the odd word series in time (that is, time-interleaving the even and odd words), and by performing error correction operations on the interleaved words. A reproduction circuit performs the error correction operations separately for the even word series and the odd word series, and delays the odd word series by the amount D in order to compensate for the delay D introduced by the delay circuit 3 to the even words in the encoding operation.

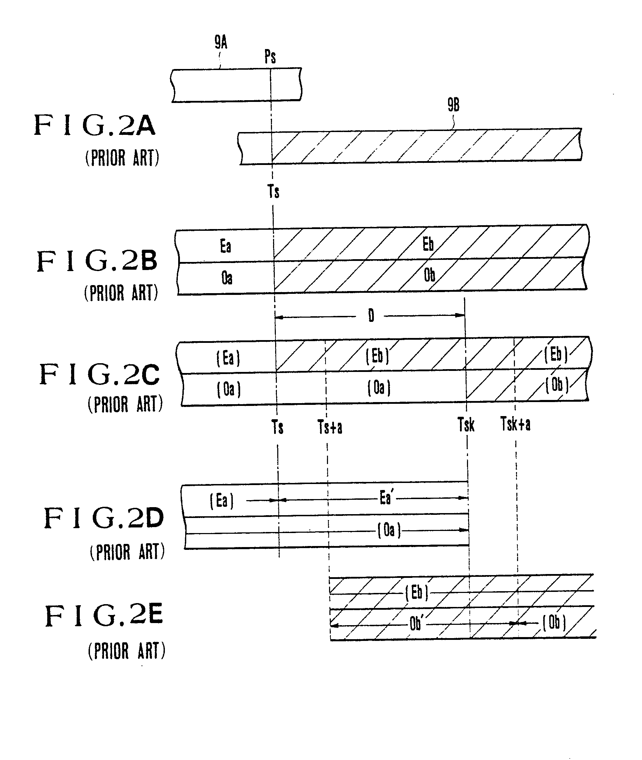

Figure 2 illustrates a splice editing operation performed on a magnetic tape used in conjunction with the apparatus of Figure 1. As shown in Figure 2A, magnetic tapes 9A and 9B are cut at a splice point Ps, and the magnetic tape 9B (indicated by the oblique lines) is connected behind the magnetic tape 9A at the boundary of the splice point Ps.

Figure 2B illustrates the even word series and the odd word series which are supplied to two correction decoders when the magnetic tape has been splice edited in the above-described manner. For ease in understanding, Figure 2B shows the even words Ea and Eb and the odd words Oa and Ob recorded in separate tracks on the magnetic tapes 9A and 9B. It will be appreciated that the odd and even words are recorded in a single track in successive, serially-by-word transmission blocks. The splice point Ps arrives at the stationary PCM playback head at a time Ts. It is seen from Figure 2B that at times prior to the time Ts, which corresponds to the edit point, even and odd words are reproduced from the magnetic tape 9A. At times following the edit point Ts, even and odd words are reproduced from the magnetic tape 9B. However, by reason of the delay circuit 3, it is recognized that, when the odd words Oa are reproduced from the magnetic tape 9B, the even words which are then in time-alignment therewith are those delayed even words Ea which have been reproduced from the magnetic tape 9A and are delayed by D time units.

The even words Ea and odd words Oa reproduced from the magnetic tape 9A appear before the editing point Ts which has a timing corresponding to the splice point Ps. After the editing point Ts, the even words Eb and odd words Ob from the magnetic tape 9B are reproduced. As described above, one error correction decoder performs error correction processing operations on the even words Ea and Eb. A second error correction decoder performs error correction processing operations on the odd words Oa and Ob. (In the figures, the word series to which the error correction operation has been performed is indicated by a reference character contained within parentheses ().

Since the odd words (Oa) and (Ob) are delayed by an amount D by a delay circuit, as shown in Figure 2C, a delayed editing point Tsk appears in the odd word series. The delayed editing point Tsk is delayed by an amount D from the editing point Ts with respect to the even word series. Accordingly, the odd words (Oa) of the magnetic tape 9A and the even words (Eb) of the magnetic tape 9B exist in the interval between the editing points Ts and Tsk.

Because the even and odd word series are deinterleaved in the reproduced data of Figure 2C, a correction disabling interval of length $a$ occurs beginning at the editing points Ts and Tsk, where the length of $a$ is a function of the time-interleaving operation performed on the data. That is, the duration $a$ is equal to the interleave length of the word series. Thus, if the individual words in a word series are interleaved by taking a block of data words having a total duration of one millisecond and interleaving or re-arranging the order of the words in the block prior to recording, then on reproduction no error detection or correction can be effected on any word in that block until all the words in the block have been reproduced, so in that case there is necessarily a correction disabling interval of one millisecond; that is the duration $a$ in that case would be one millisecond. No error correction operations can be performed in the interval from Ts to Ts+a and the interval from Tsk to Tsk+a. The reproduced data from the magnetic tapes 9A and 9B appear together in the respective intervals of Ts to Ts+a and Tsk to Tsk+a. The delay amount D is selected so that the two correction disabling intervals do not overlap.

The process for recovering the reproduced data from the magnetic tapes 9A and 9B having the relationship shown in Figure 2C is next to be described. The odd words (Oa) to which the error correction operation has been performed appear on the magnetic tape 9A until the timing point Tsk, as shown in Figure 2D. The even words (Ea) on which the error correction operations have been performed appear until the timing point Ts. Consequently, both even and odd words (Ea) and (Oa) can be used for ordinary reproduction until the timing point Ts. It is to be appreciated that no even numbered words for the magnetic tape 9A appear in the interval from Ts to Tsk. In order to supply even words in the interval from Ts to Tsk, the odd words (Oa) are interpolated to generate even words Ea' (where the apostrophe indicates the interpolated words).

The even word series (Eb) on which the error correction operations have been performed appears after the editing point Ts+a on the magnetic tape 9B, as shown in Figure 2E. Since no odd words appear in the interval from Ts+a to Tsk, error correction operations cannot be performed in that interval. Accordingly, an odd word series Ob' is generated for the interval Ts+a to Tsk+a by interpolating with the even words (Eb). Since both the even word series (Eb) and the odd word series (Ob) appear in the interval after the editing point Tsk+$a$, the usual reproduction of the recorded signal can be performed.

As is evident from Figures 2D and 2E, PCM data for the respective magnetic tapes 9A and 9B appear in the interval from Ts+$a$ to Tsk. A cross-fader can be used to cross-fade in the overlapping interval to provide a smooth transition from the data recorded on the magnetic tape 9A to the data recorded on the magnetic tape 9B. In other words, the level of the reproduced data from the magnetic tape 9A can be gradually reduced (faded-out) in the cross-fading interval, while the level of the reproduced data from the magnetic tape 9B can be gradually increased (faded-in). The cross-fade operations are performed by a mathematical operation using a coefficient and a multiplier as described, for example in our U.S. patent specification US—A—4 327 382. A multiplier and coefficient generator generates the coefficient and changes its value as a function of time. The multiplier multiplies the PCM data with the coefficient from the multiplier and coefficient generator. While the interpolated even word series and odd word series Ea' and Ob' approximate to the original data, a good quality audio signal is derived therefrom even when there is a large deviation between the interpolated even word series and the interpolated odd word series Ea' and Ob', since the data appear only in the cross-fading interval, and are of diminished volume.

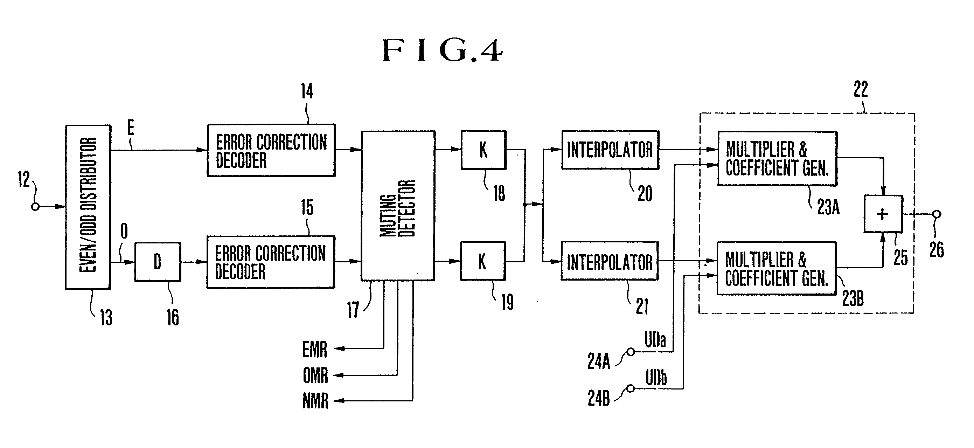

As shown in Figure 3A, a coefficient $(1-at)$, which gradually decreases, is multiplied with the data from the magnetic tape 9A to the fading out point, as indicated by reference numeral 10A. At the same time, as indicated by reference numeral 10B in Figure 3A, a coefficient which gradually increases is multiplied with the data from the magnetic tape 9B to the fading in point. Just as in the previously proposed method, the starting point of the cross-fading operation is predetermined. The changes in the values of the coefficients $(1-at)$ and $at$, corresponding to the first and second data, begin simultaneously. It is to be appreciated that the values of the coefficients $at$ and $(1-at)$, cannot change during the intervals where the error correction is disabled, that is, the interval Ts to Ts+$a$ and the interval Tsk to Tsk+$a$. In addition, the values of the coefficients $(1-at)$ and $at$, cannot be changed in the interval where a large number of errors are detected due to, for example, a drop-out.

As indicated by the broken vertical lines in Figure 3B, the interval where many errors are detected near the splice editing point can become so long that it exceeds the error correction disabling interval as described above. The digital signal is accordingly muted during such intervals so as to improve the quality of the signal reproduced therefrom. As illustrated in Figure 3B, the average level of an audio PCM signal in the cross-fading interval is reduced. The start point of the cross-fading is fixed, that is, the decrease in the value of the coefficient indicated by the reference numeral 10A begins at a predetermined point and reaches the zero level at a second predetermined point. On the other hand, the increase in the value of the coefficient indicated by reference numeral 10B' begins after the muting operation has ended, that is, at the point indicated by the broken vertical line. However, since the increase in the value of the coefficients indicated by the reference numeral 10B' begins after the decrease in the value of the coefficient indicated by the reference numeral 10A, the value of the coefficient indicated by the reference numeral 10B' does not reach its maximum value before the value of the coefficient indicated by the reference numeral 10A reaches its minimum value. The average PCM signal derived during the cross-fading interval is thus reduced, with the result being the same as if a muting operation had been performed on the PCM signal during the cross-fading interval.

An embodiment of apparatus in accordance with the invention provides a solution to the aforementioned problems and performs a good cross-fading between first and second digital data. In the embodiment, the multiplier and the coefficient from the multiplier and coefficient generator for the first data and the second data, respectively, can be independently controlled. The fade-in of the second data begins at a time when the second data can be derived. Moreover, this timing coincides with the beginning of the fading-out of the first data.

In the example of Figure 3C, the beginning point for the increase in the value of the coefficient indicated by reference numeral 11B is shifted in time so that it occurs after the muting operation has been performed on the second data. Correspondingly, the starting point for the decrease in the value of the coefficient indicated by the reference numeral 11A for the first data occurs simultaneously. A smooth cross-fading between the first and second data can thus be achieved.

Figure 4 illustrates an embodiment of apparatus in accordance with the invention. The apparatus of Figure 4 can be included, for example, in the reproduction circuit of an audio PCM tape recorder and corresponds to the apparatus of Figure 1. PCM data is reproduced from the magnetic tape, demodulated, and supplied to a time base correcting circuit (TBC) and thence, to an in input terminal 12. The PCM data is divided into an even numbered word series and an odd numbered word series by an even/odd distributor 13. The even word series is supplied to an error correction decoder 14. The odd word series is supplied to an error correction decoder 15 through a delay circuit 16 which has a delay amount D. The error correction decoders 14 and 15 perform error correction in each series. The corrected data from the error correction decoders 14 and 15 are supplied to a muting detector 17.

The muting detector 17 supervises the even word series and the odd word series after the error correction operation has been performed, and generates muting request signals EMR, OMR or NMR when there are a large number of errors in the word series and interpolation between the values for the missing words cannot be performed. (It is to be appreciated that a muting operation is performed on the data when the errors therein are so numerous as to make error correction operations thereon not possible). The muting request signal EMR is generated in response to the even word series. The muting request signal OMR is generated in response to the odd word series. The muting request signals EMR and OMR are tested to determine whether the corresponding even and odd words can be used even when only one word is to be interpolated. In a preferred embodiment, the muting request signals EMR and OMR have a value of "0" if the corresponding words cannot be used, and have a value of "1" when the corresponding words can be used. The muting request signal NMR indicates whether the corresponding words can be used in a combination of the even word series and the odd word series. The manner of deriving such muting request signals is known, for example, from our UK patent specification GB—A—2 071 370.

The even word series and the odd word series from the muting detector 17 are supplied to a pair of interpolators 20 and 21 through a pair of delay circuits 18, 19 which introduce a delay amount K. The interpolator 20 interpolates the even word series by using the odd word series to produce a PCM word series which includes corrected and interpolated words. The interpolator 21 interpolates the odd word series from the even word series to produce a PCM word series which also includes both corrected and interpolated words. Therefore, when a magnetic tape has been splice edited, the first block of PCM data reproduced from the magnetic tape 9A (as shown in Figure 2D) is supplied from the interpolator 20. It is to be appreciated that the first block of PCM data is divided into even word series and odd word series. The second block of PCM data reproduced from the magnetic tape 9B (as shown in Figure 2E) is supplied from the interpolator 21. (Just as in the former case, the second block of PCM data has been divided into an even word series and an odd word series).

The output signals from the interpolators 20 and 21 are respectively supplied to a pair of multiplier and coefficient generators 23A and 23B in a cross-fader 22. Up/down control signals UDa and UDb are supplied from corresponding input terminals 24A and 24B to the multiplier and coefficient generators 23A and 23B. The output signals from the multiplier and coefficient generators 23A and 23B are added in an adder 25 and then supplied to an output terminal 26. A digital-to-analog converter (not shown) converts the digital signal from the output terminal 26 into an analog audio signal in response thereto.

The cross-fader 22 requires a time K for the coefficient at to change from 0 to 1 or from 1 to 0. The control signals UDa, UDb indicate the direction of the change of the coefficient at. When the coefficient at is less than one, and if the control signals UDa and UDb are both one (thereby indicating an increase in value or "up"), coefficient at increases in value and stops when it reaches the maximum value of one ("1"). When the coefficient at is greater than 0, and if both the control signals UDa and UDb are 0, (indicating a decrease in value or "down"), the coefficient at decreases in value and stops at the minimum value of zero ("0").

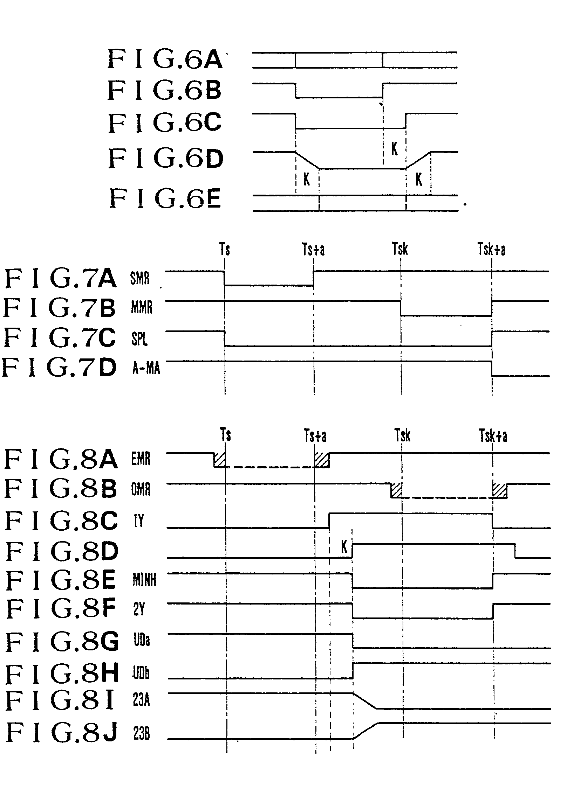

Referring to Figure 6A, the data included in the interval to be muted (indicated by the vertical lines) is supplied to the muting detector 17, and a muting request signal as shown in Figure 6B is generated in response thereto. Figure 6C illustrates a control signal for the up/down changes performed by the cross-fader 22. Namely, the up/down control signal is generated so that when the muting request signal drops to zero ("0"), the up/down control signal immediately drops to zero ("0"). When the muting request signal increases to one ("1"), the up/down control signal increases to one ("1") after a delay amount K. The coefficient of the cross-fader 22 changes as shown in Figure 6D. Since the delay circuits 18 and 19 are included in the circuit of Figure 4, the data supplied to the cross-fader 22 is also delayed by an amount K from the timing of the original data, as shown in Figure 6E. Therefore, the fade-out of the original data is performed immediately before the muting operation, and the fade-in is performed immediately after the termination of the muting operation.

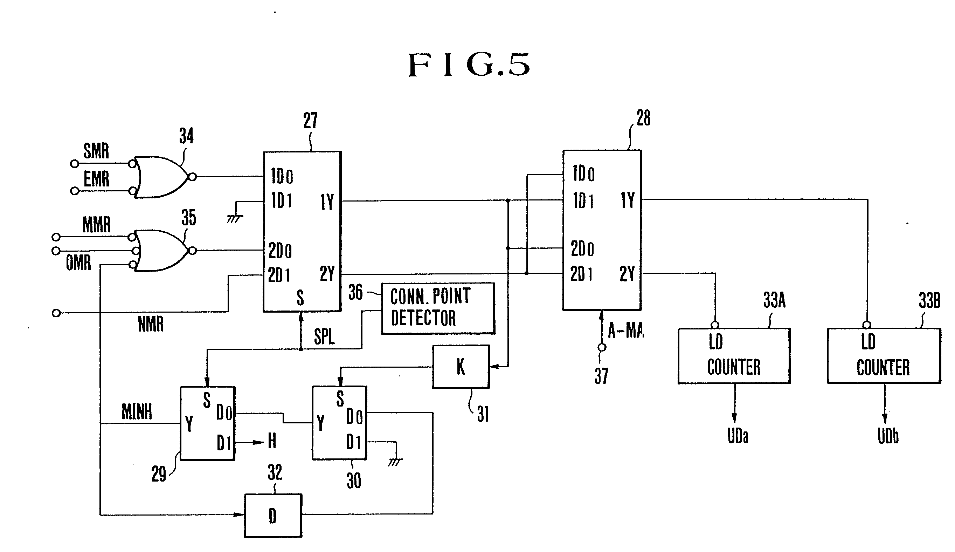

Figure 5 illustrates a circuit which generates up/down control signals for the cross-fader 22 in response to muting request signals EMR, OMR and NMR from the muting detector 17. The circuit of Figure 5 includes four selectors 27, 28, 29 and 30, a delay circuit 31 having a delay amount K, a delay circuit 32 having a delay amount D, and a pair of muting counters 33A and 33B for generating control signals UDa and UDb, respectively.

The muting request signals SMR and EMR are supplied to a NOR gate 34. The output signal from the NOR gate 34 is supplied to an input terminal 1D0 of the selector 27. A second input terminal 1D1 of the selector 27 is tied to ground, so that a zero signal ("0") is always supplied thereto. The muting request signals MMR and OMR and an output signal MINH from the selector 29 are supplied to a NOR gate 35. The output signal from the NOR gate 35 is supplied to an input terminal 2D0 of the selector 27. The muting request signal NMR is supplied to an input terminal 2D1 of the selector 27. A signal SPL, indicative of the splice interval, is supplied to an input terminal S from a connecting point detector 36 as a control signal for the selector 27.

Figures 7A and 7B illustrate the timing of the muting request signals SMR and MMR, respectively. As described before with reference to Figure 2, the muting request signal SMR has a value of zero ("0") during the muting interval for the second digital data indicated by the timing points Ts and Ts+a (where the splice editing point corresponds to the timing point Ts). The muting request signal MMR is zero ("0") in the muting interval for the first digital data indicated by the timing points Tsk and Tsk+$a$. The signal SPL is zero ("0") in the splice interval from Ts to Tsk+$a$, as shown in Figure 7C. A signal A−MA, as shown in Figure 7D, is inverted at the rising edge of the signal SPL, and is supplied from an input terminal 37 to the selector 28 (see Figure 5). The signal SPL, which, as indicated before, is indicative of the splice interval, is generated in response to an interleave error in the digital data, a phase jump in a control signal, or the like.

In the interval before the editing point Ts, the signals SPL and A−MA are both ("1"), so that the selector 27 supplies the signals at the input terminals 1D1 and 2D1 to output terminals 1Y and 2Y, respectively. Accordingly, the output signal at the output terminal 1Y is zero ("0"), while the output signal at the output terminal 2Y is equal to the value of the signal NMR. The output signal from the output terminal 1Y of the selector 27 is supplied to the input terminals 1D1 and 2D0 of the selector 28. The output signal of the selector 28 at the output terminal 1Y is zero ("0"), while the output signal at the output terminal 2Y is equal to the value of the signal NMR in the interval before the editing point Ts. The output signal from the output terminal 1Y of the selector 28 is the load input signal for the muting counter 33B. The output signal from the output terminal 2Y of the selector 28 is a load input signal for the muting counter 33A. In other words, the up/down control signal UDa from the muting counter 33A controls the coefficient of multiplier and coefficient generator 33A before the splice point Ts. The up/down control signal UDb from the muting counter 33B controls the coefficient from the multiplier and coefficient generator 23B to be zero at all times. Accordingly, the first digital data are supplied through the multiplier and coefficient generator 23A and the adder 25 to the output terminal 26.

In the interval after the timing point Tsk+$a$, the output signal appearing at the output terminal 1Y of the selector 28 is equal to the signal NMR and the output signal appearing at the output terminal 2Y of the selector 28 is zero ("0"), since the signal SPL is one ("1") and the signal A−MA is zero ("0"). Contrary to the above description with reference to an editing point, the coefficient of the multiplier and coefficient generator 23A is zero ("0"), while the coefficient of the other multiplier and coefficient generator 23B is controlled in response to the up/down control signal UDb from the muting counter 33B, through which the second digital data are derived. In normal reproduction, that is, before the splice point Ts, after the point Tsk+$a$, and excluding the splice intervals, the selector 29 always supplies a one ("1") to be supplied to the NOR gate 35 and delay circuit 32.

The operation of the circuits of Figures 4 and 5 at a splice interval in the magnetic tape will next be described with reference to Figure 8. Figure 8A illustrates the timing of the muting request signal EMR from the muting detector 17, while Figure 8B illustrates the timing of the muting request signal OMR from the muting detector 17. As shown in the intervals indicated by the oblique lines in Figures 8A and 8B, the muting request signals EMR and OMR are generated and exceed the error correction disabling interval due to, for example, a drop-out or the like near the splice editing point. Since it can happen that the muting request signals EMR and OMR in the intervals of Ts to TS+$a$ and Tsk to Tsk+$a$ are one ("1"), each interval is indicated by a broken line in the figures.

The output signal at the output terminal 1Y of Figure 8C is generated by the selector 27, and has a value of zero ("0") in the normal reproduction mode, that is, away from a splice point. The output signal at the output terminal 1Y is zero ("0") when either of the muting request signals SMR or EMR supplied to the NOR gate 34 is zero ("0"). The output signal at the output terminal 1Y of the selector 27 is delayed by the delay circuit 31 by an amount K, and the delayed signal shown in Figure 8D is supplied to the selector 30 to generate a zero ("0") as the output thereof. The output signal from the selector 30 is supplied to the NOR gate 35 through the selector 29 as the signal MINH, as shown in Figure 8E, and is then supplied to the delay circuit 32. The output signal from the delay circuit 32 is supplied to the selector 30 where a holding operation is performed thereon. The output signal at the output terminal 2Y of the selector 27 is shown in Figure 8F. The output signals at the output terminals 1Y and 2Y of the selector 27 are respectively supplied to load terminals LD of the muting counters 33A and 33B, respectively, through the selector 28 as muting request signals.

The coefficient from the multiplier and coefficient generator 23A decreases towards zero ("0") as shown in Figure 8I in response to the up/down control signal UDa (see Figure 8G). The up/down control signal UDa drops to zero at the falling edge of the output signal appearing at the output terminal 2Y of the selector 28 (and is of the same value as indicated in Figure 8F). Accordingly, the fading out of the first digital data from the interpolator 20 is performed. The muting counter 33B generates the up/down control signal UDb, as aforementioned, which rises afer a delay amount K after the falling edge of the output signal appears at the output terminal 1Y of the selector 28 (and has the same timing as depicted in Figure 8C). The coefficient from the multiplier and coefficient generator 23B thus increases towards its maximum value of one ("1"), as shown in Figure 8J, thereby executing a fading in of the second digital data from the interpolator 21.

In such a fashion, the coefficient from the multiplier and coefficient generator 23B begins to increase from the time when the data from the interpolator 21 can be derived. The coefficient from the multiplier and coefficient generator 23A begins to decrease in value from a point in time which coincides with the point in time when the value of the coefficient from the multiplier and coefficient generator 23B begins to increase. After the cross-fading operation has been performed, and the splice interval (which includes a new splice editing point) appears in the data supplied to the multiplier and coefficient generator 23B, a similar cross-fading operation as described above can be performed.

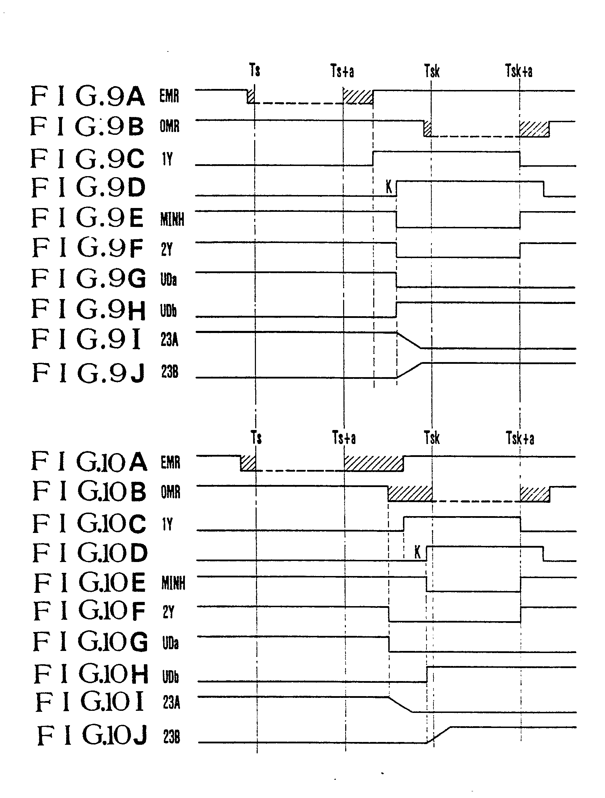

The time chart of Figure 9 indicates the operation of the circuits of Figures 4 and 5 when the muting request signals EMR and OMR, as shown in Figures 9A and 9B, respectively, have been generated in response to a muting interval which extends for a much longer period as compared with the muting interval of Figure 8 due to, for example, a drop-out or the like. As illustrated in Figure 9C, the rising edge of the signals at the output terminal 1Y of the selectors 27 and 28 are delayed as described above in response to the extension of the muting interval when the muting request signals EMR and OMR are zero ("0"). In a like fashion, the falling edges of the output signals at the output terminal 2Y of the selectors 27 and 28 are delayed in response to the extension of the muting interval where the muting request signals EMR and OMR are zero ("0"), as illustrated in Figure 9F. Figures 9I and 9J illustrate the respective coefficients from the multiplier and coefficient generators 23A and 23B of the cross-fader 22. It is to be appreciated that the start point of the cross-fading is further delayed as compared with the interval described with reference to Figure 8.

Figure 10 illustrates the time charts for the interval in which the muting request signals EMR and OMR are both zero ("0") overlap, as shown in Figurse 10A and 10B. It is to be noted that this case occurs when the interval in which a large number of errors are detected near a splice point is extremely long. The coefficient from the multiplier and coefficient generator 23A begins to decrease towards its minimum value, as shown in Figure 10I, before the coefficient from the multiplier and coefficient generator 23B begins to increase towards its maximum value, as shown in Figure 10J. It is to be appreciated from a reference to the muting request signal OMR that the data from the multiplier and coefficient generator 23A cannot be derived. Accordingly, in the example of Figure 10, a normal cross-fading operation cannot be performed. While the starting point for a cross-fading operation is predetermined, it is, nevertheless, possible to prevent both the multiplier and coefficient generators 23A and 23B from performing a simultaneous muting operation on the data.

As described above, two independently controllable multiplier and coefficient generators are provided in which the coefficient increases when the second digital data can be derived, and in which the coefficient for the first digital data begins to decrease to its minimum value when the first digital data cannot be derived or when the coefficient for the second digital data starts to increase even if it can be derived. Further as described above, the multiplier and coefficient generator 23A fades out the first digital data when one of the muting request signals EMR and OMR terminates and the signal SPL is zero ("0"), and also when the other of the muting request signals EMR and OMR is generated. The multiplier and coefficient generator 23B fades in the second digital data when one of the muting request signals EMR and OMR terminates. Therefore, it is possible to prevent an undesirable reduction in the level of the data derived even if the interval where many errors are detected at a splice point changes, or even if the interval to which a muting operation is to be performed thereon changes.

It is possible for the tape speed to increase substantially, whereby the amount of data recorded thereafter increases, after a splice editing point is detected, so that the data before and after the splice editing point overlap.

**Claims**

1. Apparatus for connecting first and second pulse code modulated (PCM) audio data from first and second magnetic tapes which have been splice edited together, each of said first and second PCM audio data comprising an interleaved even series and an interleaved odd series of digital words, one of said series of digital words being delayed (by Tsk−Ts) relative to the other, the apparatus comprising:
error detector means for detecting errors in said even and odd series of digital words; and
cross-fading means for fading out said first PCM audio data and fading in said second PCM audio data; characterised in that:
said error detector means (14, 15, 17) further generates respective even and odd muting request signals (EMR, OMR) when the number of errors in said even and odd series of digital words is such as to prevent error correction;
splice point detector means (36) detects the splice point (PS, TS) between said first and second PCM audio data and generates a splice control signal (SPL; Fig. 7C) beginning at said splice point and of a duration corresponding to the sum of said delay (Tsk−Ts) and the interleave length (a) of said series of digital words in response thereto; and
said cross-fading means (22) fades out said first PCM audio data in response to termination of one of said even and odd muting request signals while said splice control signal is present and in response to generation of the other one of said even and odd muting request signals, and fades in said second PCM audio data when one of said even and odd muting request signals terminates.

2. Apparatus according to claim 1 wherein said first and second PCM audio data comprise time-interleaved even and odd numbered words; and the apparatus further comprises distributor means (13) for separating said even and odd numbered words and supplying said even and odd numbered words to said error detector means (14, 15, 17).

3. Apparatus according to claim 2 further comprising delay means (16) connected to said distributor means (13) for correcting said time-interleaving of said even and odd numbered words.

4. Apparatus according to claim 3 wherein said even and odd numbered words include respective even and odd error correction codes; and the apparatus further comprises error correcting means (14, 15) responsive to said even and odd error correction codes for removing errors from said even and odd numbered words.

5. Apparatus according to claim 4 further comprising interpolator means (20, 21) for receiving said even and odd numbered words and generating odd and even numbered interpolated words, respectively, therefrom.

6. Apparatus according to claim 5 wherein said cross-fading means (22) includes:

a first cross-fader (23A) for fading-out said odd numbered words and said even numbered interpolated words;

a second cross-fader (23B) for fading in said even numbered words and said odd numbered interpolated words; and

adding means (25) connected to said first and second cross-faders (23A, 23B) for adding together the faded-out and faded-in signals therefrom.

7. Apparatus according to claim 6 further comprising delay means (18, 19) between said error detection means (14, 15) and said interpolator means (20, 21) for delaying said odd and even numbered words.

## Patentansprüche

1. Apparat zum Verbinden erster und zweiter pulscodemodulierter (PCM-) Audiodaten von einem ersten und einem zweiten Magnetband, welche Magnetbänder in einem Schneidvorgang zusammengefügt worden sind, wobei sowohl die ersten als auch die zweiten PCM-Audiodaten eine verschachtelte geradzahlige Folge und eine verschachtelte ungeradzahlige Folge von Digitalwörtern enthalten, die relativ zueinander (um $T_{sk}-T_s$) verzögert sind, welcher Apparat

eine Fehlerfassungseinrichtung zum Erfassen von Fehlern in den geradzahligen und ungeradzahligen Folgen von Digitalwörtern und

eine Überblendeinrichtung zum Ausblenden der ersten PCM-Audiodaten und zum Einblenden der zweiten PCM-Audiodaten enthält, dadurch gekennzeichnet,

daß die Fehlerfassungseinrichtung (14, 15, 17) desweiteren jeweils geradzahlige und ungeradzahlige Abschwächungsanforderungssignale (EMR, OMR) erzeugt, wenn die Anzahl der Fehler in den geradzahligen und ungeradzahligen Folgen von Digitalwörtern derart ist, daß eine Fehlerkorrektur verhindert wird,

daß ein Verbindungspunkterfassungsmittel (36) den Punkt der Verbindung (PS, TS) zwischen den ersten und zweiten PCM-Audiodaten erfaßt und in Reaktion darauf ein Verbindungssteuersignal (SPL, Fig. 7C) erzeugt, das an dem Punkt der Verbindung beginnt und eine Dauer hat, die mit der Summe der Verzögerung ($T_{sk}-T_s$) und der

Verschachtelungslänge (a) der Folge von Digitalwörtern korrespondiert, und

daß die Überblendeinrichtung (22) die ersten PCM-Audiodaten in Reaktion auf die Beendigung eines der geradzahligen und ungeradzahligen Abschwächungsanforderungssignale, während das Verbindungssteuersignal ansteht, und in Reaktion auf die Erzeugung des anderen der geradzahligen und ungeradzahligen Abschwächungsanforderungssignale ausblendet und die zweiten PCM-Audiosignale einblendet, wenn eines der geradzahligen und ungeradzahligen Abschwächungsanforderungssignale endet.

2. Apparat nach Anspruch 1, bei dem die ersten und zweiten PCM-Audiosignale zeitverschachtelte geradzahlig und ungeradzahlig numerierte Wörter enthalten und der Apparat desweiteren eine Verteileinrichtung (13) zum Trennen der geradzahlig und ungeradzahlig numerierten Wörter und zum Zuführen der geradzahlig und ungeradzahlig numerierten Wörter zu der Fehlererfassungseinrichtung (14, 15, 17) enthält.

3. Apparat nach Anspruch 2, der desweiteren ein Verzögerungsmittel (16) enthält, das mit der Verteileinrichtung (13) zum Korrigieren der Zeitverschachtelung der geradzahlig und ungeradzahlig numerierten Wörter verbunden ist.

4. Apparat nach Anspruch 3, bei dem die geradzahlig und ungeradzahlig numerierten Wörter jeweilige geradzahlige und ungeradzahlige Fehlerkorrekturcodes enthalten und der Apparat desweiteren Fehlerkorrekturmittel (14, 15) enthält, die auf die geradzahligen und ungeradzahligen Fehlerkorrekturcodes zum Beseitigen von Fehlern aus den geradzahlig und ungeradzahlig numerierten Wörtern ansprechen.

5. Apparat nach Anspruch 4, der desweiteren Interpoliermittel (20, 21) zum Aufnehmen der geradzahlig und ungeradzahlig numerierten Wörter und zum Erzeugen ungeradazhlig bzw. geradzahlig numerierter interpolierter Wörter daraus enthält.

6. Apparat nach Anspruch 5, bei dem die Überblendeinrichtung (22)

eine erste Überblendeinrichtung (23A) zum Ausblenden der ungeradzahlig numerierten Wörter und der geradzahlig numerierten interpolierten Wörter,

eine zweite Überblendeinrichtung (23B) zum Einblenden der geradzahlig numerierten Wörter und der ungeradzahlig numerierten interpolierten Wörter sowie

einen Addierer (25) enthält, der mit der ersten und der zweiten Überblendeinrichtung (23A, 23B) zum Addieren der ausgeblendeten und eingeblendeten Signale daraus verbunden ist.

7. Apparat nach Anspruch 6, der desweiteren Verzögerungsmittel (18, 19) zwischen der Fehlerfassungseinrichtung (14, 15) und den Interpoliermitteln (20, 21) zum Verzögern der ungeradzahlig und geradzahlig numerierten Wörter enthält.

## Revendications

1. Appareil destiné à raccorder des premières et

des secondes données de son modulées par impulsions codées (MIC) provenant d'une première et d'une seconde bandes magnétiques qui ont été montées ensemble par raccord, chacune desdites premières et secondes données de son MIC comprenant une série paire imbriquée et une série impaire imbriquée de mots numériques, l'une desdites séries de mots numériques étant retardée (Tsk—Ts) par rapport à l'autre, l'appareil comportant: un dispositif de détection d'erreurs destiné à détecter des erreurs dans lesdites séries paire et impaire de mots numériques; et un dispositif de fondu enchaîné destiné à faire disparaitre progressivement lesdites premières données de son MIS et à faire apparaître progressivement lesdites secondes données de son MIC; caractérisé en ce que: ledit dispositif de détection d'erreurs (14, 15, 17) produit en outre des signaux de demande de silence pair et impair (EMR, OMR) quand le nombre des erreurs dans lesdites séries paire et impaire de mots numériques est tel qu'il empêche toute correction d'erreurs; un dispositif de détection de point de raccord (36) détecte le point de raccord (Ps, Ts) entre lesdites premières et lesdites secondes données de son MIC et produit un signal de contrôle de raccord (SPL; Figure 4C) qui commence audit point de raccord et dont la durée correspond à la somme dudit retard (Tsk—Ts) et de la durée d'imbrication (a) desdites séries de mots numériques en réponse à cette détection; et ledit dispositif de fondu enchaîné (22) fait disparaître progressivement lesdites premières données de son MIC en réponse à la disparition de l'un desdits signaux de demande de silence pair et impair pendant que ledit signal de contrôle de raccord est présent et en réponse à la production de l'autre desdits signaux de demande de silence pair et impair, et fait apparaître progressivement lesdites secondes données de son MIC quand l'un desdits signaux de demande de silence pair et impaire cesse.

2. Appareil selon la revendication 1, dans lequel lesdites premières et lesdites secondes données de son MIC consistent en des mots d'ordre pair et impair imbriqués dans le temps; et l'appareil comporte en outre un dispositif distributeur (13) destiné à séparer lesdits mots d'ordre pair et impair et fournissant lesdits mots d'ordre pair et impair audit dispositif de détection d'erreurs (14, 15, 17).

3. Appareil selon la revendication 2, comportant en outre un dispositif à retard (16) connecté audit dispositif distributeur (13) pour corriger ladite imbrication dans le temps desdits mots d'ordre pair et impair.

4. Appareil selon la revendication 3, dans lequel lesdits mots d'ordre pair et impair contiennent des codes respectifs de correction d'erreurs paires et impaires; et l'appareil comporte en outre un dispositif de correction d'erreurs (14, 15) réagissant auxdits codes de correction d'erreurs paires et impaires en supprimant les erreurs desdits mots d'ordre pair et impair.

5. Appareil selon la revendication 4, comportant en outre un dispositif interpolateur (20, 21) destiné à recevoir lesdits mots d'ordre pair et impair et à produire des mots interpolés d'ordre impair et pair respectivement à partir de ces mots.

6. Appareil selon la revendication 5, dans lequel ledit dispositif de fondu enchaîné (22) comporte: un premier appareil de fondu enchaîné (23A) destiné à faire disparaître progressivement lesdits mots d'ordre impair et lesdits mots interpolés d'ordre pair; un second appareil de fondu enchaîné (23B) destiné à faire apparaitre progressivement lesdits mots d'ordre pair et lesdits mots interpolés d'ordre impair, et un dispositif additionneur (25) connecté audit premier et audit second appareils de fondu enchaîné (23A, 23B) pour additionner ensemble les signaux disparaissant progressivement et apparaissant progressivement qui en proviennent.

7. Appareil selon la revendication 6, comportant en outre un dispositif à retard (18, 19) entre ledit dispositif de détection d'erreurs (14, 15) et ledit dispositif interpolateur (20, 21) pour retarder lesdits mots d'ordre impair et pair.

# F I G . 1

(PRIOR ART)

# F I G . 3A

# F I G . 3B

# F I G . 3C

1

9A
Ps

# F I G.2A
(PRIOR ART)

9B

Ts

# F I G.2B
(PRIOR ART)

Ea          Eb
0a          0b

D

# F I G.2C
(PRIOR ART)

(Ea)    (Eb)        (Eb)
(0a)        (0a)        (0b)

Ts    Ts+a        Tsk    Tsk+a

# F I G.2D
(PRIOR ART)

(Ea)            Ea'
(0a)

# F I G.2E
(PRIOR ART)

(Eb)
0b'    (0b)

F I G. 4

F I G.5

0 087 886

FIG.6A
FIG.6B
FIG.6C
FIG.6D
FIG.6E

FIG.7A SMR
FIG.7B MMR
FIG.7C SPL
FIG.7D A-MA

Ts          Ts+a          Tsk          Tsk+a

FIG.8A EMR
FIG.8B OMR
FIG.8C 1Y
FIG.8D
FIG.8E MINH
FIG.8F 2Y
FIG.8G UDa
FIG.8H UDb
FIG.8I 23A
FIG.8J 23B

Ts          Ts+a          Tsk          Tsk+a

5

FIG.9A EMR
FIG.9B OMR
FIG.9C 1Y
FIG.9D
FIG.9E MINH
FIG.9F 2Y
FIG.9G UDa
FIG.9H UDb
FIG.9I 23A
FIG.9J 23B

Ts   Ts+a   Tsk   Tsk+a

FIG.10A EMR
FIG.10B OMR
FIG.10C 1Y
FIG.10D
FIG.10E MINH
FIG.10F 2Y
FIG.10G UDa
FIG.10H UDb
FIG.10I 23A
FIG.10J 23B

Ts   Ts+a   Tsk   Tsk+a